Europäisches Patentamt

(19) European Patent Office

Office européen des brevets

(11) Publication number: **0 116 816**
**A1**

(12) ` **EUROPEAN PATENT APPLICATION**

(21) Application number: 83850333.2

(22) Date of filing: 14.12.83

(51) Int. Cl.³: **E 01 C 7/18**
**E 01 C 23/06, C 08 L 95/00**

(30) Priority: 20.01.83 SE 8300286

(43) Date of publication of application:
29.08.84 Bulletin 84/35

(84) Designated Contracting States:
AT BE CH DE FR GB IT LI NL

(71) Applicant: AB SKANSKA CEMENTGJUTERIET
Box 7050
S-402 31 Göteborg(SE)

(72) Inventor: Hilliges, Friedrich
Björkvägen 5
S-43050 Kallered(SE)

(74) Representative: Avellan-Hultman, Olle
Avellan-Hultman Patentbyra AB P.O. Box 5366
S-102 46 Stockholm 5(SE)

(54) Method of re-using asphalt covering and asphalt covering mass produced according to the method.

(57) A method of re-using cutted masses or crushed masses of old asphalt coverings indoors and outdoors by reactivating the cutted or crushed asphalt mass, whereby the old asphalt covering is cutted or broken up to a grain size of up to 100 mm or preferably 20-40 mm and in cold condition or heated up to 50 °C is mixed with 1-4 or preferably 2-3 % by weight of a bitumenous foam containing 0.1-10 or preferably 1-3 by weight of water and having a temperature of 110-250 °C or preferably 140-180 °C. Up to 30 % by weight as a maximum of the cutted mass or the crushed mass can be substituted by a stone material having a grain size of 10-30 mm for improving the grain structure of the asphalt mixture, and a slight amount of an adhesion agent and/or a plastic or cautchouc agent may be added. The binder of bitmuenous foam may contain bitumen, tar, and asphalt solution, a combination of bitumen and tar and/or plastic or a rubber modified binder or any equivalen other rock oil product. The invention also relates to an asphalt covering mass produced according to the above method.

EP 0 116 816 A1

Croydon Printing Company Ltd.

P-813

AB SKÅNSKA CEMENTGJUTERIET

Method of Re-using Asphalt Coverings and Asphalt Covering Mass Produced According to the Method

The present invention generally relates to manufacture of asphalt masses for use as asphalt coverings indoors and outdoors, and the invention is more particularly related to a method of re-using asphalt coverings by reactivation thereof by means of a bitumenous foam material.

Since long asphalt masses for such coverings have been prepared in that a mineral component is mixed with one or more binders having different properties. Thus it is previously known to manufacture masses by:

- hot techniques, whereby a stone material is heated and is mixed with hot asphalt;

- cold techniques, whereby a cold stone material is mixed with a cold bitumenous binder, viz. an asphalt solution or an asphalt emulsion;

- mixed techniques, whereby the asphalt mass is prepared in that a stone material which is heated to only a moderate temperature is mixed with a bitumenous binder which has also been heated to only a moderate temperature.

By time the costs for making asphalt coverings have increased strongly, both as concerns the raw material costs for the asphalt binder and the stone aggregate and as concerns the costs for heating both the stone material and the asphalt. In order to reduce the costs for asphalt masses it has been suggested that old or waste asphalt coverings shall be re-used. For this purpose the waste asphalt covering must be broken up and fractured either in that the covering is crushed or machine cutted. In the following the re-used waste asphalt will be referred to as cutted mass or crushed mass, but it is to be understood that the expression also includes waste asphalt coverings which have been fractured in any other way.

The efforts made in many countries to find a suitable method of reactivating waste asphalt coverings for the purpose of re-using said coverings have resulted in the following methods:

- mixing of 10-30 % by weight of cold cutted massed from former asphalt coverings into a hot asphalt mass, what normally is made in a batch mixing mill;

- mixing of more than 30 % by weight of cold cutted asphalt masses into a hot asphalt mass in specially formed drum mixing mills;

- treatment of 100 % cutted asphalt mass with an asphalt emulsion or an asphalt solution.

In the two first mentioned methods a part of the cold cutted asphalt mass is heated and is mixed with an amount of newly prepared asphalt mass comprising a stone material and asphalt. The heating of the cold cutted asphalt mass involves substantial technological problems, consumes large amounts of energy and causes direct environmental problems in that the cutted asphalt mass may produce gases, so called blue smoke, which is hazardous to your health. The heating generally is made with gas flames or oil flames, and during the said re-heating of the cold cutted asphalt mass there is a risk that the cutted mass is detoriated in that the binder might oxidize, burn or carbonize. Especially when heating the cutted asphalt mass in the drum mixing mill there is a risk that the binder oxidizes, whereby the binding ability is reduced or is completely eliminated.

The mixing of the cutted mass thereby prepared with the bitumen emulsion or the asphalt solution, in turn, is disadvantageous in that the total amount of binder become so vast that the stability of the asphalt mass thereby prepared is substantially reduced. The asphalt emulsion contains an essentially amount of water, generally between 33 and 45 % by weight of water and this may cause problems when laying the mass, and it may give the ready asphalt covering bad properties. From quality and economical viewpoints this method has therefore, so far, not left the test stage. Thus the method is relatively unexperienced and it may be expected that an asphalt mass prepared by waste, cutted or crushed masses with factory manufactured so called asphalt emulsions gives an asphalt covering having less good properties in one or more respects. Further, it should be considered that the costs for the asphalt emulsion used as a binder is as high as or even higher than the costs for hot conventional asphalt.

It is further known from the US patent 2,917,935 to prepare covering masses from asphalt and stone material without heating the stone material. This is made in that an asphalt foam is prepared by mixing water into hot asphalt, whereupon the said asphalt foam in a hot condition is mixed with the stone material. At the time when this method was invented it was rather surprising that such a mixing of hot asphalt foam and cold stone material was possible and that it was possible by the said mixing method to provide asphalt coverings having similar properties as asphalt coverings made according to conventional methods. The explanation therefore may be that the hot asphalt foam may have a higher wetting ability of the stone material than the wetting ability of hot asphalt in a non-foamed state. The stone material has a rather hydrofilic character, and the hot foam asphalt therefore is capable of wetting the cold stone material to an extent that hot non-foamed aspahlt cannot do.

In the known method the cold stone material is mixed with up to 8 % by weight of a binder in the form of foamed asphalt having a temperature of 144-170 °C.

Therefore it is known that attempts have been made to provide asphalt masses by mixing hot foamed asphalt with a cold stone material. In the Nordic climat said attempts do not seem to have given a satisfactory result, and so far the method has not come inte practical use. Until now it has not been considered possible to re-use cold cutted asphalt masses by mixing such cold cutted masses with hot foamed asphalt. It has also been considered that such a possible method is uneconomical since a rather large amount of binder in the form of foamed asphalt, for instance up to 8-9 % by weight must be added. It has also been considered that an exchange of stone-material to re-used cold cutted asphalt mass or a crushed asphalt mass eminating from waste asphalt coverings when executing the known method should give a totally too large amount of asphalt in relation to the amount of stone mass or aggregate, and that the asphalt covering thereby should get substantially impaired properties as compared with asphalt coverings prepared in the conventional way.

Surprisingly it has shown that it is possible to prepare asphalt coverings by re-using cutted asphalt masses or crushed asphalt masses from waste asphalt coverings in that the cold cutted or crushed mass is mixed with a very little amount of binder in the form of hot foamed asphalt. A pre-requisite for a good result in this new method is that the foamed asphalt contains such small amount of water as 0,1 to 10 % by weight or preferably between 1 and 3 % by weight, and that the cold cutted asphalt mass is mixed with such small amount of hot foamed asphalt as 1-4 % by weight or preferably 2-3 % by weight.

Preferably a bitumenous binder like asphalt is used as a binder, but it is also possible to use tar, a mixture of asphalt and tar, an asphalt solution (oil and asphalt) or any other equivalent rock oil product. As previously known a small amount of adhesion agent may be added to the binder, for instance a diamine, a tar fraction or any other adhesion agent in an amount of 0.1 to 0.5 % by weight as calculated on the amount of binder. It is also possible to substitute some amount of the bitumenous binder by some plastic or cautchouc product for instance 5 % cautchouc thereby giving the asphalt covering a slightly increased elasticity. As mentioned the binder is added in an amount of between 1 and 4 % by weight as calculated on the covering mass. An addition of less than 1 % by weight gives a too weak binding property and an addition of more than 4 % by weight gives a totally too high amount of binder and thereby a bad stability of the asphalt covering.

The working time of the foam process varies depending on what equipment and what foaming method is utilized as well as some other factors and is not critical to the invention. It should, however, be noted that the foaming process must not be executed too long since there is thereby a risk that the foam is broken and reverts to bitumen and water respectively.

Thus, the binder in this case comprises a foam which is prepared in that the hot binder is transformed to a foam comprising between 0.1 and 10 % by weight of water. A water amount of less than 0.1 % does not give a useful foam, and a water amount of more than 10 % may cause some problems in the manufacturing process, when laying and packing the asphalt mass, and there is a risk that the bitumenous binder is cooled down too strongly.

When foaming the bitumenous binder this should be maintained at a temperature of between 110 and 250 °C or preferably between 140 and 180 °C. At a temperature of the binder of less than 110 °C the amount of water does not foam together with the binder, and at a temperature of more than 250 °C, there is a risk that the binder oxidizes, is burnt or is carbonized. The grain size of the cutted asphalt mass may vary within rather wide ranges. When cutting or crushing an old asphalt covering there is a rather wide spread of the grain sizes, and for the invention grains having sizes up to 100 mm may be useful. For street and road coverings the grain size should be between 0 and 30 mm, for other purposes, for instance for water building purposes the grain size of the cutted asphalt masses can be as large as 100 mm.

It is even possible to substitute a small amount, for instance 30 % at a maximum of the cutted masses by a fresh stone material, especially a stone material having a grain size of between 10 and 30 mm. In some cases this may improve the grain structure in the combination of cutted masses/stone material, especially in case that the cutted asphalt masses contain a large amount of material having grain sizes below 10 mm and/or above 30 mm.

In the following the invention is to be explained by way of a number of examples of a method of reactivating waste asphalt coverings.

EXAMPLE 1

An asphalt mass for a road covering was prepared by reactivating an old (waste) asphalt covering in the following way:

A waste asphalt covering comprising a stone material and about 5 % asphalt which had been used for ten years was cutted in cold state to a maximum particle size of about 20 mm. The cold cutted mass was placed in a positive mixer and hot foamed asphalt having a water content of 2.5 % by weight was added. The foamed asphalt was calculated to be added in an amount of 1.5 % by weight as calculated on the ready covering mass. After stirring for about 60-80 seconds it was judged that the cutted mass and the foamed asphalt was intimately mixed together. The temperature of the foamed asphalt when added to the cold cutted mass was 150 °C, whereas the cutted mass had a temperature of 18 °C. After the mixture a hardly noticable temperature increase was observed as compared with the temperature of the cold cutted mass. The covering mass was laid as a strengthening ware layer on a substrate having a relatively poor load capacity (partly crackled oil gravel road) and was packed as conventional by means of a static surface compactor. The covering mass was useful for light traffic immediately after the packing operation but did not obtain its full strength and load capacity until the water of the covering was successively reduced during the drying process. In several respects the covering proved to have the same good properties as asphalt coverings made according to conventional methods. However, a slightly less pressure resistance than in conventional covering masses could be noticed. Possibly this depends on the fact that the amount of added foamed asphalt in the final phase was added to the originally relatively high amount of asphalt of the cold cutted mass, so that the total amount of asphalt became relatively high. For many fields of use this is not considered disadvantageous, and the fact may be compensated in that the place of laying the covering is chosen considering the properties of the covering mass.

EXAMPLE 2

An old street covering the asphalt of which during the use thereof has become strongly aged, was broken up to a grain size of about 30 mm. 80 % by weight of the cold cutted mass was mixed with 2 % by weight of a bitumenous foam comprising an asphalt solution (bitumen having admixed therein an oil product and an adhesion agent) and having an addition of 20 % by weight of a stone material with a grain size of between 16 and 32 mm. After about 90 seconds of mixture in a positive mixer the asphalt mass was useful, and the asphalt mass was laid as a ware layer on a partly crackled oil gravel way. After the water of the covering had dried load tests were made with building machines. It could be established that the properties of the asphalt mixtured prepared according to the invention was quite equivalent to the properties of asphalt mixtures for support layers prepared according to conventional methods.

EXAMPLE 3

An asphalt mass was prepared like in example 1, but only 1.0 % by weight of a binder was added. The ready covering mass had a slightly inperfect binding ability and proved to have a tendency that the particles of the cutted asphalt mass were released from each other.

EXAMPLE 4

The same method as in example 3 was repeated, but in this case 0.3 % by weight of a conventional adhesion agent was added. The adhesion agent was a diamine. The ready covering mass had improved properties as compares with the covering mass according to example 3, but still there was a slight tendency that the particles of the cutted asphalt mass were released from each other.

EXAMPLE 5

The same test was repeated as in example 5 with the difference that in the present case was added 4 % by weight by a bitumenous foam as a binder. The covering mass was easily traeated and easily laid, but for some purposes, for instance for heavy traffic, the covering mass has a slightly inperfect stability depending on the total relatively high amount of binder.

EXAMPLE 6

The same method was repeated as in example 1 but with the difference that in the present case 2 % by weight of a bitumenous foam containing 0.3 % by weight of water was added. There were difficulties in providing the bitumenous foam, and therefore the temperature of the binder had to be increased to about 180 °C. After drying the ready covering mass had a satisfactory stability.

EXAMPLE 7

The same method was repeated as in example 6, but in the present example the bitumenous foam contained 7 % by weight of water. The ready covering mass was easily treated and easily packed, but the stability and the load capacity immediately after the covering was laid and packed was somewhat low. After five days of drying the main part of the water had disappeared, and the covering mass showed to have a satisfactory stability.

EXAMPLE 8 .

The same method was repeated as in example 7 but with the difference that 10 % of a stone material having a particle size of between 10 and 30 mm was mixed with 90 % cutted asphalt mass. The ready covering mass had a slightly improved stability as compared with the mass prepared according to example 7, probably depending on the improved grain structure obtained by the addition of stone material.

## EXAMPLE 9

For water building purposes a covering mass was prepared which contained 3 % by weight of a bitumenous foam having 4 % by weight of water. The binder was heated to a temperature of 180 °C, and to the binder was added 0.2 % of an adhesion agent in the form of a diamine. The binder was mixed with a crushed asphalt mass having a largest particle size of 90 mm. The covering mass was well suited for water building purposes and gave a satisfactory strength and stability. For comparative purposes the same covering mass was laid as a support layer on a substrate of normally packed mac-adam. For this purpose the covering mass was judged to have a too rough or too coarse surface and to give an unsatisfactory surface structure. Depending on the large particle size of the crushed asphalt mass there also were preparation problems.

## EXAMPLE 10

The same method as in example 9 was repeated but with the difference that the crushed mass was given a particle size of 60 mm, and that the binder was given an addition of 12 % water. After laying and packing the covering mass proved to have a slightly to high content of water what permanently reduced the interconnection of the mass.

## EXAMPLES 11-13

The same method as in example 2 was repeated in cold weather. In this case the cutted mill had a temperature of about 0 °C but in a first test the binder had a temperature of 150 °C. Depending on the low temperature of the cutted asphalt mass there were problems of intemately mixing the cutted mass and the binder, probably for the reason that the cutted mass cooled down the binder too strongly. The test therefore was repeated whereby the binder had a temperature of 200 °C. Also in this case there were difficulties in mixing the cutted asphalt mass and the binder. Therefore the test was once again repeated whereby the temperature of the cutted asphalt mass/stone material was increased to 35 °C. The mixing, the laying and the packing could be made easily and smoothly and the ready covering mass had a good load capacity and stability.

An additional number of tests were made which like in the above examples are made account for in the following table.

TABLE

| Example | Aggregate | | | | Temp. °C | Binder | | | | | Evaluation Scale |
| | Cutted asphaltmass | | Additive | | | New m. added, in total | | | Additive | | |
| | Amount % | Part. size Max. mm | Agent | Amount % | | Amount % | Water cont. % | Temp. °C | Type | Amount % | 1-5 |
|---|---|---|---|---|---|---|---|---|---|---|---|
| 1 | 100 | 20 | - | - | 18 | 1,5 | 2,5 | 150 | - | - | 4 |
| 2 | 80 | 30 | stone m. | 20 | 18 | 2,0 | 2,5 | 150 | - | - | 5 |
| 3 | 100 | 20 | - | - | 18 | 1,0 | 2,5 | 150 | - | - | 3 |
| 4 | 100 | 20 | - | - | 18 | 1,0 | 2,5 | 150 | diamin | 0,3 | 3,5 |
| 5 | 100 | 20 | - | - | 18 | 4,0 | 2,5 | 150 | diamin | 0,3 | 4 |
| 6 | 100 | 20 | - | - | 18 | 2,0 | 0,3 | 180 | - | - | 4 |
| 7 | 100 | 20 | - | - | 18 | 2,0 | 7,0 | 180 | - | - | 3,5 |
| 8 | 90 | 20 | stone m. | 10 | 18 | 2,0 | 7,0 | 180 | - | - | 3,7 |
| 9 | 100 | 90 | - | - | 18 | 3,0 | 4,0 | 180 | diamin | 0,2 | 4/2 |
| 10 | 100 | 60 | - | - | 18 | 3,0 | 12,0 | 180 | diamin | 0,2 | 2 |
| 11 | 80 | 30 | stone m. | 20 | 0 | 2,0 | 2,5 | 150 | - | - | - |
| 12 | 80 | 30 | stone m. | 20 | 0 | 2,0 | 2,5 | 200 | - | - | (-) |
| 13 | 80 | 30 | stone m. | 20 | 35 | 2,0 | 2,5 | 200 | - | - | 4,5 |
| 14 | 100 | 20 | - | - | 18 | 5,0 | 1,0 | 150 | - | - | 2 |
| 15 | 100 | 20 | - | - | 18 | 4,0 | 2,0 | 150 | - | - | 3 |
| 16 | 100 | 20 | - | - | 18 | 3,0 | 4,0 | 250 | - | - | 1 |
| 17 | 100 | 20 | - | - | 18 | 3,0 | 4,0 | 110 | - | - | - |
| 18 | 100 | 20 | - | - | 18 | 2,5 | 9,0 | 180 | diamin | 0,5 | 3 |
| 19 | 100 | 40 | - | - | 18 | 2,0 | 3,0 | 180 | caoutch. | 0,4 | 3/4 |
| 20 | 100 | 40 | - | - | 10 | 4,0 | 3,0 | 210 | diamin | 0,2 | 4 |

0116816

12

From the above table is evident that the amount of bitumenous foam should be between 1 and 4 or preferably 2 and 3 % by weight and that the amount of water in the binder should be between 0.1 and about 10 % by weight. It is also evident that the temperature of the binder should not be less than 110 °C since in such case foaming problems appear and that the temperature should not exceed 250 °C since in such case there is a risk that the binder oxidizes, carbonizes or is burnt. As a bitumenous binder asphalt, tar, a mixture of asphalt and tar, an asphalt solution or any other equivalent rock oil product may be used. Some amount of an adhesion agent may be admixed to the binder, for instance a diamine in an amount of 0.1-0.5 % by weight or a natural or synthetic resin or a cautchouc product.

1

## CLAIMS

1. Method of re-using old asphalt coverings for outdoor use and indoor use by reactivating the old asphalt covering, c h a r a c t e-r i z e d  in that the old asphalt covering is machine cutted or broken up to an average grain size of up to 100 mm, and in cold condition or heated to 50 °C as a maximum the asphalt mass is mixed with 1-4 % by weight of a hot foamed binder in the form of a water containing binder foam of bitumen, tar, asphalt solution, a combination of bitumen and tar and/or a plastic or rubber modified binder or any equivalent other rock oil product thereby providing a formable asphalt mixture which is laid and packed in previously known way.

2. Method according to claim 1, c h a r a c t e r i z e d  in that the activating binder is heated to 110-250 °C or preferably 140-180 °C before being admixed to the cold or only slightly heated broken up old asphalt covering.

3. Method according to claim 1 or 2, c h a r a c t e r i z e d in that the hot activating binder is mixed with 0.1-10 or preferably 1-3 % by weight of water as calculated on the amount of hot binder to provide a binder foam before being admixed in the cold broken up old asphalt covering.

4. Method according to claim 1, 2 or 3, c h a r a c t e-r i z e d  in that the hot binder is given an addition of 0.1-0.5 % by weight as calculated on the amount of binder of a known adhesion agent.

5. Method according to any of the preceding claims, c h a-r a c t e r i z e d  in that the cold broken up old asphalt covering is mixed with.up to 30 % by weight as calculated on the re-used old asphalt covering of a conventional stone material, preferably having a grain size of between 10 and 30 mm thereby improving the grain structure.

6. Method according to any of the preceding claims, c h a-r a c t e r i z e d  in that the binder foam is given an addition of a plastic or rubber material, preferably in an amount of 0.5-5 % by weight as calculated on the amount of binder before being admixed in the aggregate or the asphalt mass.

7. Method according to any the preceding claims, c h a r a-c t e r i z e d  in that the cold re-used asphalt covering in case of cold weather is pre-heated to a temperature of at least 15-18 °C and up to 50 °C as a maximum.

8. Asphalt covering mass for outdoor and indoor use prepared by reactivating of old asphalt coverings according to any of the preceding claims and comprising a cutted or broken up old asphalt covering having a grain size of up to 100 mm and between 1 and 4 % by weight of a binder in the form of a water containing binder foam of bitumen, tar, asphalt solution, a combination of bitumen and tar and/or a plastic or rubber modified binder or any equivalent other rock oil product.

9. Asphalt covering mass according to claim 8, c h a r a c t e- r i z e d in that it comprises up to 30 % by weight as calculated on the old re-used asphalt covering of a conventional stone material, preferably having a grain size of between 10 and 30 mm.

10. Asphalt covering mass according to claim 8 or 9, c h a- r a c t e r i z e d in that the binder foam comprises 0.1-10 or preferably 1-3 % by weight of water, 0.1-0.5 % by weight of a known adhesion agent like a. diamine and/or 0.5-5 % by weight of a plastic or rubber material, all as calculated of the amount of binder.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 286 239 (WALTER SCHOLKOPF) * Page 7, claim 1 * | 1 | E 01 C 7/18<br>E 01 C 23/06<br>C 08 L 95/00 |
| Y,D | US-A-2 917 395 (LADIS H. CSANYI) * Column 1, lines 15-16, 50-51; column 8, lines 9-13 * | 1 | |

TECHNICAL FIELDS
SEARCHED (Int. Cl. ³)

E 01 C
C 08 L

The present search report has been drawn up for all claims

| Place of search | Date of completion of the search | Examiner |
|---|---|---|
| THE HAGUE | 25-04-1984 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82